(19) Europäisches Patentamt
European Patent Office
Office européen des brevets

(11) Veröffentlichungsnummer : **0 150 387**
**B1**

(12) # EUROPÄISCHE PATENTSCHRIFT

(45) Veröffentlichungstag der Patentschrift : **28.09.88**

(51) Int. Cl.⁴ : **C 11 D 3/00**, C 11 D 3/18, B 01 D 19/04

(21) Anmeldenummer : **84115265.5**

(22) Anmeldetag : **12.12.84**

(54) **Verwendung von paraffinhaltigen Entschäumungskompositionen in Mitteln für das maschinelle Reinigen von Gegenständen mit harten Oberflächen.**

(30) Priorität : **02.01.84 DE 3400003**

(43) Veröffentlichungstag der Anmeldung : **07.08.85 Patentblatt 85/32**

(45) Bekanntmachung des Hinweises auf die Patenterteilung : **28.09.88 Patentblatt 88/39**

(84) Benannte Vertragsstaaten : **AT BE CH DE FR GB IT LI LU NL SE**

(56) Entgegenhaltungen :
**EP-A- 0 000 216**
**EP-A- 0 008 829**
**EP-A- 0 063 346**
**DE-A- 3 013 391**
**DE-A- 3 242 202**
**Die Akte enthält technische Angaben, die nach dem Eingang der Anmeldung eingereicht wurden und die nicht in dieser Patentschrift enthalten sind.**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Wuhrmann, Juan Carlos, Dr.**
**Curieweg 8**
**D-4000 Düsseldorf (DE)**
Erfinder : **Brands, Karl Dieter**
**Paul-Löbe-Strasse 36**
**D-4000 Düsseldorf (DE)**
Erfinder : **Müller, Heinz**
**Engelshöhe 48**
**D-5600 Wuppertal (DE)**
Erfinder : **Schumann, Klaus, Dr.**
**Kepler-Strasse 33**
**D-4006 Erkrath (DE)**
Erfinder : **Altenschöpfer, Theodor, Dr.**
**Einsteinstrasse 3**
**D-4000 Düsseldorf 13 (DE)**

**EP 0 150 387 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Das Reinigen von Gegenständen mit harten Oberflächen wie Geschirr, Gläsern und Bestecken in marktüblichen Spülmaschinen oder etwa von Eiern aus Legebatterien in dafür geeigneten Maschinen vor dem mechanischen Brüten mit Hilfe der hierfür im Handel angebotenen im wesentlichen tensidfreien, alkalisch wirkenden Reinigungsmittel sowie das Entfernen von Speise- und sonstigen Schmutzrückständen aus den Spülmaschinen erfolgt im allgemeinen ohne besondere Probleme.

Es kann jedoch dann zu einer verschlechterten Reinigungsleistung kommen, wenn in den Spülmaschinen Schaum auftritt. Ursachen hierfür liegen beispielsweise in :

— dem Vorhandensein sehr schaumintensiver Geschirranschmutzungen (z. B. Ei, Milchpulver) ;

— der Unterschreitung der minimalen Betriebstemperaturen, die dann in Maschinen des gewerblichen Bereichs Schaumbildung durch verschleppte Klarspülertenside verursacht ;

— dem unbeabsichtigten Leerfahren des Reinigungstanks gewerblicher Spülanlagen unter Luftsaugen der Umwälzpumpen, etwa bei falschem Einordnen großflächiger Teile (Tabletts u. ä.) oder dem Zusetzen von Tankleitungen durch Federnrückstände ;

— konstruktiven Mängeln der Spülmaschinen, wie schlechter Zonentrennung bei Mehrtankanlagen oder unzureichendem Flottenstand.

Die Schaumbildung in Spülmaschinen des Haushalts oder des gewerblichen Bereichs bewirkt damit einhergehend eine verschlechterte Reinigungsleistung, da der Sprühdruck drastisch abfällt, das Wasser das zu reinigende Spülgut nicht mehr erreicht und die Mechanik der Spülflotte damit als Reinigungsfaktor entfällt. Durch die mangelhafte Reinigung wird naturgemäß dann z. B. auch der Klartrockeneffekt bei Geschirr als Spülgut negativ beeinflußt und in ungünstigen Fällen treten Schäden am Spülgut und an der Spülmaschine auf.

Lösungen des Problems der Schaumbildung in Spülmaschinen werden schon länger angeboten, konnten sich jedoch bis heute nicht generell durchsetzen. So werden etwa den Reinigungstanks gewerblicher Spülmaschinen separat silikonhaltige Emulsionen zudosiert. Sie bewirken zwar einen sofortigen Schaumzerfall, nachteilig hierbei ist aber, daß bei der Geschirreinigung zusätzlich zu dem Reinigungsmittel und dem Klarspülmittel noch ein weiteres Produkt bereitgehalten werden muß, dessen Einsatz gelegentlich vergessen werden kann.

Ferner besteht bei Einsatz von silikonhaltigen Schaumdämpfungsmitteln, unabhängig davon, ob diese als separates Produkt zudosiert oder in das Reinigungs- oder meist in das Klarspülmittel integriert werden, immer die Gefahr der « Silikonisierung » des Spülgutes mit nachteiligen Auswirkungen auf die Benetzbarkeit der Spülgutoberflächen, die zu Störungen beim Gebrauch in Haushalts- und Großküchen führen kann. Bei Frischeiern kann die Silikonisierung zum Verkleben der feinen Schalenporen führen, so daß der Einhalt keinen Sauerstoff mehr bekommt und abstirbt, was sich an einer Minderung der Brüterate erkennen läßt. Auch die Verwendung von hochpropoxylierten und damit nicht nur selbst schaumarmen, sondern auch schaumdämpfend wirkenden Tensiden, wie z. B. dem Addukt aus Polyglycerin und 22 Mol Propylenoxid mit einem Molekulargewicht von etwa 2 000 stellt keine brauchbare Problemlösung dar, weil derartige Tenside zu Wechselwirkungen mit Rezepturbestandteilen der Reinigungsmittel, insbesondere mit Ätzalkalien und Chlorträgern neigen, was zu Verfärbungen der Produkte führt. Gleichzeitig nimmt dabei die schaumdämpfende Wirkung der Zusätze ab. Außerdem genügen derartige Schaumdämpfer auf Tensidbasis nicht mehr den gesetzlichen Forderungen der « Verordnung über die Abbaubarkeit von anionischen und nichtionischen grenzflächenaktiven Stoffen in Wasch- und Reinigungsmitteln » vom 30.01.1977, die seit 01.10.1980 für Haushaltsmaschinenspülmittel verbindlich ist und für gewerbliche Maschinenspülmittel am 31.12.1984 in Kraft treten soll.

Aufgrund der vorstehend genannten Sachverhalte werden an einen schaumdämpfenden Wirkstoff als Rezepturbestandteil von Reinigungsmitteln für das maschinelle Spülen folgende Anforderungen gestellt :

— Hohe spezifische Wirksamkeit. Hierdurch kann der mengenmäßige Anteil des schaumdämpfenden bestandteils im gesamten Mittel gering gehalten werden.

— Chemische Verträglichkeit mit den übrigen Bestandteilen solcher Reinigungsmittel, insbesondere mit Ätzalkalien, Alkalien wie Metasilikaten und Chlorträgern.

— Keine negative Beeinflussung der Lagerbeständigkeit der Produkte.

— Ökologische und toxikologische Unbedenklichkeit.

— Gute biologische Abbaubarkeit.

— Die schaumdämpfenden Mittel dürfen keinen wesentlichen Silikonanteil enthalten. Da dieser bei wiederholter Anwendung zur Silikonisierung des Spülgutes führt.

Aus der EP-A-63 346 sind stets pulverförmige Entschäumer zur Anwendung in wäßrigen Systemen bekannt, die im wesentlichen aus einer flüssigen homogenen Mischung aus einem verzweigtkettigen primären $C_{16}$- bis $C_{30}$-Alkohol, der eine flüssige Trägersubstanz darstellt, und hydrophobierter Kieselsäure in einem speziellen Gewichtsverhältnis bestehen, die durch Erhitzen auf 100 bis 240° solange gerührt wurde, bis eine homogene Mischung erhalten wurde. Darüber hinaus enthalten diese Entschäumer ein wasserunlösliches Wachsgemisch und einen wasserlöslichen pulverförmigen Träger, also insgesamt stets 4 Bestandteile, von denen zwei Hilfsstoffe darstellen.

Die DE-A-3 242 202 betrifft eine schaumdrückende Zusammensetzung, die als Hauptkomponente eine Verbindung der Formel $R_1$—X—A—Y—$R_2$ enthält, worin $R_1$ und $R_2$ unabhängig voneinander einen gegebenenfalls hydroxysubstituierten Kohlenwasserstoffrest mit jeweils 7 bis 30 Kohlenstoffatomen bedeuten, X und Y unabhängig voneinander eine der Gruppen —CO, —CONH—, —OCONH— oder —NHCONH—, und A eine Alkylengruppe mit 1 bis 20 Kohlenstoffatomen ist. Weiterhin enthält diese Zusammensetzung Paraffinwachs, hydrophobierte Kieselsäure und ein wasserunlösliches flüssiges Öl, das Paraffinöl sein kann. Die Entgegenhaltung enthält keinerlei Hinweis, daß man diese Zusammensetzung in Kombination mit Geschirrspülmitteln verwenden kann.

Die EP-A-8829 betrifft eine Reinigungsmittelzusammensetzung mit kontrolliertem Schaum, die ein ternäres Schaumkontrollsystem enthält, das eine einheitliche Dispersion von hydrophober Kieselsäure und hydrophilen nichtionischen Tensiden in Wachs darstellt. Das hydrophile nichtionische Tensid muß einen HLB-Wert im Bereich von 14 bis 19 besitzen. Dazu gehören besonders hochethoxylierte Alkohole oder Alkylphenole, und obgleich die Wachse theoretisch auch Mischungen sein können, gibt es dort keine Lehre über besondere derartige Mischungen.

Die EP-A-216 bezieht sich auf Reinigungsmittel mit einem Schauminhibitor. Dieser Schauminhibitor besteht aus einer Mischung aus etwa 0,1 bis 25 Gew.-% hydrophobierter Kieselsäure, 2 bis 70 Gew.-% eines festen Kohlenwasserstoffs mit einem Schmelzpunkt im Bereich von 35 bis 100 °C und 30 bis 98 Gew.-% eines bei Raumtemperatur flüssigen Kohlenwasserstoffs. Wie man jedoch Spalte 6, Zeilen 21 bis 36 entnehmen kann, werden keine Mischungen fester Paraffinwachse mit unterschiedlichen Schmelzbereichen verwendet.

Es wurde nun gefunden, daß die Verwendung einer Mischung aus pyrogener, hydrophobierter Kieselsäure und bei Raumtemperatur festen Paraffinwachsgemischen aus

a) 20 bis 60 Gew.-% mikrokristallines Paraffinwachs mit einem Erstarrungspunkt von 60 °C bis 95 °C,

b) 15 bis 60 Gew.-% Hartparaffin mit einem Erstarrungspunkt von 40 °C bis 60 °C und

c) 1 bis 50 Gew.-% Weichparaffin mit einem Erstarrungspunkt von 32 °C bis 42 °C als Entschäumungskomposition in alkalisch wirkenden Mitteln, die an Tensiden höchstens etwa 2 Gew.-% an alkali- und aktivchlorbeständigen nichtionischen Tensiden enthalten, für das maschinelle Reinigen von Gegenständen mit harten Oberflächen den oben gestellten Anforderungen gerecht wird.

Diese Bestandteile können entweder in einem flüssigen Trägermaterial dispergiert oder mit einem pulverförmigen Trägermaterial vermischt werden. Die flüssigen Entschäumungskompositionen können auch in bekannter Weise auf die eigentlichen pulverförmigen oder granulierten Reinigungsmittelbestandteile aufgesprüht werden, wobei diese selbst als Trägermaterial dienen. Ferner ist es möglich, die Entschäumungskomposition bei der Granulierung der Gesamtbestandteile der Reinigungsmittel oder Teilen davon mit einzugranulieren.

Neben der schaumdämpfenden Funktion wird durch die paraffinwachshaltigen flüssigen Entschäumungskompositionen auch eine staubbindende und anti-caking-Wirkung in bezug auf die Reinigungsmittel als solche erzielt, die Handhabung dieser Produkte verbessert. Die in fester Form durch Vermischen mit Trägermaterialien hergestellten Entschäumungsmittel werden den Reinigungsmittelbestandteilen ebenfalls in bekannter Weise untergemischt.

Zur Herstellung der flüssigen Entschäumungskompositionen werden die Bestandteile in 60 bits 99, vorzugsweise 70-96 Gewichtsteilen einer Trägerflüssigkeit, bei der es sich vorzugsweise um flüssige, kettenverzweigte primäre Alkohole, insbesondere Guerbetalkohole, oder um Mineralöle oder Mischungen daraus handelt, dispergiert. Dabei beträgt der Anteil an hydrophobierter pyrogener Kieselsäure 0,05 bis 25, vorzugsweise 0,5 bis 10 Gewichtsteile und der eines bei Raumtemperatur festen Paraffinwachsgemisches mit einem Erstarrungspunkt im Bereich von 35 bis 120 °C beträgt 1 bis 30, vorzugsweise 3 bis 25 Gewichtsteile.

Die erfindungsgemäß zu verwendenden Entschäumungskompositionen können aber auch aus dem bei Raumtemperatur festen Paraffinwachsgemisch und der pyrogenen hydrophobierten Kieselsäure in Kombination mit einem pulverförmigen wasserlöslichen Trägermaterial bestehen. Die Mengenverteilung der Entschäumerbestandteile und des festen Trägermaterials, die durch physikalisches Vermischen kombiniert werden, ist die gleiche wie vorstehend bei der flüssigen Entschäumungskomposition.

Das pulverförmige wasserlösliche Trägermaterial soll mit dem zu entschäumenden wäßrigen System verträglich sein. Dafür kommen besonders die Alkalisalze polymerer Phosphate, Borate, Carbonate, Silikate, Sulfate oder Mischungen daraus in Frage. Bevorzugt wird calciniertes Natriumtriphosphat. Will man phosphatfrei arbeiten, so kann auch calciniertes oder hydratisiertes Natriumsulfat verwendet werden.

Die pyrogenen hydrophobierten Kieselsäuren sind im Stand der Technik hinreichend bekannt. Die spezifische Oberfläche beträgt 100 bis 300 $m^2/g$. Die durchschnittliche Primärteilchengröße liegt zwischen 5 mμ und 50 mμ. Die Hydrophobierung wird z. B. durch Behandeln mit Alkylchlorsilan erreicht und ist in der US-PS 3 388 073 beschrieben.

Das feste Paraffinwachsgemisch hat einen Erstarrungspunkt im Bereich von ca. 35 bis 120 °C. Die unter die Sammelbezeichnung « Paraffinwachs » fallenden Verbindungen stellen natürliche Wachse von Pflanzen oder Tieren dar, die aus fossilen Materialien wie Braunkohle, Torf und insbesondere Erdöl isoliert werden können, sowie synthetische Wachse, herstellbar z. B. nach dem Fischer-Tropsch-Verfahren oder durch Polymerisation von Ethylen bzw. thermischen Abbau von hochmolekularem Polyethylen.

Chemisch bestehen die Paraffinwachse aus langkettigen Kohlenwasserstoffen. Dabei kann es sich um solche mit linearen Ketten oder um Iso- und Ringparaffine mit Seitenketten ohne sonstige funktionelle Gruppen handeln. Paraffinwachse stellen im allgemeinen komplexe Stoffgemische ohne scharfen Schmelzpunkt dar. Zu ihrer Charakterisierung wird daher der Erstarrungspunkt (E. P.) gemessen. Darunter versteht man den Temperaturbereich, in dem das Wachs durch langsames Abkühlen aus dem flüssigen in den festen Zustand übergeht. Ein wichtiges Kriterium für die erfindungsgemäße Verwendbarkeit von Wachsen ist deren Eigenschaft, einen Erstarrungspunkt im Bereich von 35 bis 120 °C zu besitzen. Dieses Kriterium und die leichte technische Zugänglichkeit lassen insbesondere die natürlichen und synthetischen Paraffinwachsgemische geeignet erscheinen.

Die erfindungsgemäßen Paraffinwachsgemische bestehen aus :

a) 20 bis 60 Gew.-% mikrokristallines Paraffinwachs mit einem Erstarrungspunkt von 60 °C bis 95 °C.

b) 15 bis 60 Gew.-% Hartparaffin mit einem Erstarrungspunkt von 40 °C bis 60 °C.

c) 1 bis 50 Gew.-% Weichparaffin mit einem Erstarrungspunkt von 32 °C bis 42 °C.

Als Komponente (a) kommen bekannte mikrokristalline Paraffinwachse in Frage, die einen Erstarrungspunkt von 60 °C bis 95 °C, vorzugsweise von 62 °C bis 90 °C aufweisen. Derartige mikrokristalline Wachse sind z. B. Bestandteil von Montanwachsen bzw. hochschmelzenden Erdölfraktionen (Ceresin) und zeichnen sich durch einen Gehalt an verzweigten und cyclischen Paraffinen aus. Ihr Anteil an den Schaumregulierungsmitteln beträgt vorzugsweise 30 bis 55 Gew.-% und insbesondere 40 bis 50 Gew.-%.

Als Komponente (b) eignen sich übliche Paraffinkohlenwasserstoffe, die im Gegensatz zu den vorgenannten mikrokristallinen Wachsen ein mehr oder weniger ausgeprägtes Kristallisationsverhalten zeigen. Der Erstarrungspunkt dieser allgemein als Hartparaffine bezeichneten Kohlenwasserstoffe liegt zwischen 40 °C und 60 °C, vorzugsweise zwischen 42 °C und 56 °C. Bezogen auf Schaumregulierungsmittel beträgt ihr Anteil 15 bis 60 Gew.-%, vorzugsweise 20 bis 50 Gew.-% und insbesondere 25 bis 45 Gew.-%.

Die unter (c) aufgeführte Komponente ist mit 1 bis 50 Gew.-%, vorzugsweise mit 5 bis 25 Gew.-% anwesend und besteht aus Weichparaffin mit einem Erstarrungspunkt von 32 °C bis 42 °C, vorzugsweise einem solchen von 35 °C bis 40 °C. Derartige Paraffinfraktionen sind z. B. unter der Bezeichnung Vaseline im Handel.

Bei der zum Dispergieren der erfindungsgemäßen Entschäumungskompositionen benutzten organischen Flüssigkeit handelt es sich in erster Linie um kettenverzweigte primäre $C_{18}$-$C_{30}$-Alkohole, insbesondere die sogenannten Guerbetalkohole. Sie stellen einfach verzweigte Isoalkohole dar, die durch die Guerbetreaktion aus Fettalkoholen gewonnen werden. Sie lassen sich durch die folgende allgemeine Formel wiedergeben :

$$R-CH_2-CH_2-\underset{\displaystyle R}{\underset{|}{CH}}-CH_2-OH$$

in der die beiden Gruppen R gleich oder verschieden sein können und Alkylreste mit 4 bis 16 Kohlenstoffatomen bedeuten. Insbesondere werden in der erfindungsgemäßen Zusammensetzung Guerbetalkohole mit insgesamt 18 bis 30 Kohlenstoffatomen bevorzugt. Die eingesetzten Guerbetalkohole können einheitliche Verbindungen oder Gemische sein ; bevorzugt werden bei Raumtemperatur flüssige Produkte.

Auch andere kettenverzweigte primäre Alkohole, beispielsweise durch Oxosynthese zugängliche Produkte entsprechender Kettenlänge, lassen sich einsetzen. Hohe Entschäumerwirksamkeit und einfache und billige Rohstoffzugänglichkeit sind Kriterien, die in Verbindung mit den Guerbetalkoholen optimal sind.

Auch bei Raumtemperatur flüssige aliphatische Kohlenwasserstoffe, insbesondere Mineralöle, können in den Formulierungen enthalten sein. Unter Mineralöl versteht man die Sammelbezeichnung für die aus mineralischen Rohstoffen (Erdöl, Torf, etc.) gewonnenen flüssigen Destillationsprodukte, die im wesentlichen aus Gemischen von gesättigten Kohlenwasserstoffen bestehen. In lebenden Organismen bestehen die Öle dagegen aus gemischten Glycerinestern von Fettsäuren. Auch diese Öle vegetarischen Ursprungs können benutzt werden.

## Beispiele

Die Reihenfolge der Vermischung der Bestandteile ist ohne Relevanz. Empfehlenswert ist jedoch, die Trägerflüssigkeit vorzulegen, dann die geschmolzenen Paraffinwachse und gleich anschließend die hydrophobierte pyrogene Kieselsäure dazuzugeben. Das Einrühren kann bei beliebiger Rührgeschwindigkeit stattfinden, jedoch wird ein Flügelrührer mit normalen Rührgeschwindigkeiten vorgezogen.

Die erfindungsgemäßen flüssigen Entschäumungskompositionen wurden durch Homogenisieren der einzelnen Bestandteile mittels eines Flügelrührers in den angegebenen Trägerflüssigkeiten erhalten. Um

eine gute Durchmischung der bei Raumtemperatur festen paraffinischen Wachse und der Mineralölkomponente zu gewährleisten, mußte die Homogenisierung bei Temperaturen vorgenommen werden, die über dem Schmelzpunkt der benutzten Wachsmischung lagen.

Für die Zubereitung der festen Entschäumungskompositionen wurde in einem Laborkneter mit heizbarem Arbeitsbehälter und einem Fassungsvermögen von 0,75 l (Fa. Janke & Kunkel, Staufen/Breisgau, BRD) das calcinierte Natriumtriphosphat mit einem Schüttgewicht von 0,4-0,5 kg/l (Thermphos L®, Fa. Hoechst AG) vorgelegt und auf 50-90 °C erhitzt. Dann wurde die angegebene Menge des Gemischs aus der hydrophobierten Kieselsäure und dem durch Erhitzen auf 90 °C verflüssigten Paraffingemisch hinzugefügt. Unter weiterem Mischen wurde dann auf Raumtemperatur abgekühlt.

A) 95,0 Gewichtsteile 2-n-Octyldodecanol,
Flüssig 0,5 Gewichtsteile Vaseline,
1,7 Gewichtsteile Paraffinwachs mit einem Erstarrungspunkt von 42 bis 44 °C,
2,2 Gewichtsteile Mikrokristallines Wachs mit einem Erstarrungspunkt von 85 bis 86 °C (Witcodur® 272, Fa. Witco),
0,6 Gewichtsteile hydrophobierte Kieselsäure (Sipernat® D 10, Fa. Degussa),

B) 88,0 Gewichtsteile Thermphos L®,
Fest 1,2 Gewichtsteile Vaseline,
4,1 Gewichtsteile Paraffinwachs mit einem Erstarrungspunkt von 42 bis 44 °C,
5,3 Gewichtsteile Mikrokristallines Wachs mit einem Erstarrungspunkt von 85 bis 86 °C,
1,4 Gewichtsteile hydrophobierte Kieselsäure (Sipernat® D 10, Fa. Degussa).

Die Entschäumungskompositionen wurden den Reinigungsmitteln unabhängig von deren Zustandsform in Mengen von 0,05 bis 5 Gew.-% vorzugsweise 0,5 bis 2,5 Gew.-% zugemischt.

Die Prüfung der Wirksamkeit der Entschäumungskompositionen erfolgte nach zwei verschiedenen Methoden :

I. Im Intensivschaumgerät

Entsprechend der in Fette, Seifen, Anstrichmittel « Die Ernährungsindustrie », 66 (1964), Seiten 528 bis 530 beschriebene Methode wurde die schaumdämpfende Wirkung der Produktbeispiele A und B geprüft.

Dabei wurden bei einer Temperatur von 65 °C 34 l mit einem Umlauf von 160 bis 180 l/min umgepumpt. Dann wurden zusammen mit 100 ml ca. 15 °C kaltem Wasser 76 g Vollei und 38 g Reinigungsmittel mit/ohne Entschäumungskompositionen zugegeben und unter Umwälzung auf 65 °C aufgeheizt. Nach Erreichen dieser Temperatur, (was ca. 25 Minuten dauerte), wurde nach Stillstand der Maschine die Höhe des verbleibenden Schaumes an einer Skala abgelesen. Die Schaumhöhe (Blindwert) — 76 g Vollei mit 38 g Reinigungsmittel ohne Entschäumungskomposition — betrug 240 mm.

Das eingesetzte Reinigungsmittel bestand aus :
37 Gewichtsteilen Pentanatriumtriphosphat
44 Gewichtsteilen Natriummetasilikat, wasserfrei
1,5 Gewichtsteilen Na-Dichlorisocyanurat, wasserfrei
8 Gewichtsteilen Natriumcarbonat, wasserfrei
Rest Wasser

II. In einer Haushaltsgeschirrspülmaschine

38 g Vollei und 38 g Reinigungsmittel mit/ohne Entschäumungskomposition wurden im Normalprogramm mit 65 °C einer handelsüblichen Haushaltsgeschirrspülmaschine vom Modell Miele G 503 S zu Beginn des Reinigungsganges eingebracht. Über einen Druckschreiber wurde der Pumpendruck im Umwälzsystem der Maschine registriert. Der Pumpendruck nahm mit steigendem Schaumvolumen ab, während die Blindwertkurve einen stetigen Verlauf zeigte.

Blindwert :
a) 38 g Reinigungsmittel (Rezeptur s. u. I)
b) 38 g Vollei/38 g Reinigungsmittel.

Anwendungsbeispiele

1. Ein Reinigungsmittel, bestehend aus :

37 Gewichtsteilen Pentanatriumtriphosphat, wasserfrei
46 Gewichtsteilen Natriummetasilikat, wasserfrei
1 Gewichtsteil Trichlorisocyanursäure
10 Gewichtsteilen Natriumcarbonat, wasserfrei
Rest Wasser

wurde auf Kosten des Wasseranteils in einem 5-kg-Lödige-Mischer durch Aufsprühen mit 1,0 und 1,5 Gewichtsteilen der Entschäumungskomposition A vermischt und die entschäumende Wirkung in einer Miele-Haushaltsgeschirrspülmaschine, Typ G 503 S, nach Methode II geprüft. Der Druckschreiber zeigte bei Zugabe von 1,0 Gewichtsteilen Entschäumungskomposition bereits nach 30 Sekunden einen Druckanstieg auf den schaumlosen Zustand. Bei Zugabe von 1,5 Gewichtsteilen Entschäumungskomposition entwickelte sich offenbar von Beginn an überhaupt kein Schaum.

2. Ein Reinigungsmittel, bestehend aus :

37 Gewichtsteilen Pentanatriumtriphosphat, wasserfrei
44 Gewichtsteilen Natriummetasilikat, wasserfrei
1,5 Gewichtsteilen Na-Dichlorisocyanurat, wasserfrei
8 Gewichtsteilen Natriumcarbonat, wasserfrei
1 Gewichtsteil Entschäumungskomposition A
Rest Wasser

wurde nach der unter I beschriebenen Methode im Intensivschaumgerät geprüft.

| Zeit sec | Schaumhöhe mm Blindwert (ohne Entschäumer) | Schaumhöhe mm Produktbeispiel 2 |
|---|---|---|
| 0 | 240 | 20 |
| 30 | 230 | 20 |
| 60 | 230 | 25 |
| 90 | 230 | 30 |
| 120 | 230 | 25 |
| 300 | 230 | 30 |
| 1200 | 230 | 40 |

Trotz der hohen Volleibelastung der Umwälzflotte wurde die schaumdämpfende Wirkung der Entschäumungskomposition A im Produkt von Versuchsbeginn an deutlich.

3. Ein Reinigungsmittel, bestehend aus :

45 Gewichtsteilen Pentanatriumtriphosphat, wasserfrei
15 Gewichtsteilen Natriummetasilikat, wasserfrei
20 Gewichtsteilen Ätznatron (NaOH)
17 Gewichtsteilen Natriumcarbonat, wasserfrei
2 Gewichtsteilen Trichlorisocyanursäure
1 Gewichtsteil Entschäumungskomposition A

wurde nach der unter I beschriebenen Methode im Intensivschaumgerät geprüft.

| Zeit sec | Schaumhöhe mm Blindwert (ohne Entschäumer) | Schaumhöhe mm Produktbeispiel 3 |
|---|---|---|
| 0 | 230 | 40 |
| 30 | ↓ | 45 |
| 60 |  | 40 |
| 90 |  | 50 |
| 120 |  | 40 |
| 300 |  | 40 |
| 1200 | 230 | 50 |

Auch hier wurde von Anfang an eine erhebliche Schaumdämpfung beobachtet.

4. Ein Reinigungsmittel, bestehend aus :

37 Gewichtsteilen Pentanatriumtriphosphat, wasserfrei
44 Gewichtsteilen Natriummetasilikat, wasserfrei
1,5 Gewichtsteilen Na-Dichlorisocyanurat, wasserfrei
8 Gewichtsteilen Natriumcarbonat, wasserfrei
Rest Wasser

wurde mit 0,3 und 1 Gewichtsteilen der Entschäumungskomposition 3 vermischt und nach Methode I im Intensivschaumgerät geprüft.

Schaumhöhe mm

| Zeit sec | Blindwert (ohne Entschäumer) | Produktbeispiel 4 0,3 Gew.-Teile | 1,0 Gew.-Teile |
|---|---|---|---|
| 0 | 240 | 190 | 10 |
| 30 | 230 | 190 | 10 |
| 60 | 230 | 180 | 10 |
| 90 | 240 | 160 | 15 |
| 120 | ↓ | 140 | 20 |
| 300 | | 110 | 10 |
| 1200 | 240 | 80 | 10 |

Bereits bei Zugabe von 0,3 Gewichtsteilen Entschäumungskomposition wurde eine Schaumreduzierung gemessen. Bei Zugabe von 1,0 Gewichtsteilen Entschäumungskomposition trat praktisch überhaupt kein Schaum auf.

Die in den Beispielen 1 bis 4 wiedergegebene Wirksamkeit der flüssigen bzw. festen Entschäumungskompositionen A und B drückte sich neben der Entschäumung gleichzeitig in einem hervorragenden Lagerverhalten aus. Nach einer Lagerzeit von 6 Monaten bei 30 °C und 70 % relativer Luftfeuchtigkeit waren alle Produkte noch unverändert rieselfähig und der Aktivchlorverlust lag mit 20 bis 30 % im Bereich des üblichen.

Die Reinigungsmittelzusammensetzungen der vorstehend aufgeführten Beispiele sind tensidfrei. Es können jedoch noch geringe Mengen bis etwa 2, vorzugsweise bis etwa 1,5 Gew.-% an alkali- und aktivchlorbeständigen nichtionischen Tensiden enthalten sein. Die Zusammensetzungen gelten dann als « im wesentlichen tensidfrei ».

**Patentansprüche**

1. Verwendung einer Mischung aus pyrogener, hydrophobierter Kieselsäure und bei Raumtemperatur festen Paraffinwachsgemischen aus

a) 20 bis 60 Gew.-% mikrokristallines Paraffinwachs mit einem Erstarrungspunkt von 60 °C bis 95 °C,

b) 15 bis 60 Gew.-% Hartparaffin mit einem Erstrarrungspunkt von 40 °C bis 60 °C und

c) 1 bis 50 Gew.-% Weichparaffin mit einem Erstarrungspunkt von 32 °C bis 42 °C als Entschäumungskomposition in alkalisch wirkenden Mitteln, die an Tensiden hochstens etwa 2 Gew.-% an alkali- und aktivchlorbeständigen nichtionischen Tensiden enthalten, für das maschinelle Reinigen von Gegenständen mit harten Oberflächen.

2. Verwendung einer Mischung nach Anspruch 1 als Dispersion in flüssigen Trägermaterialien.

3. Verwendung einer Mischung nach Anspruch 1 und 2 als flüssige Dispersion in flüssigen kettenverzweigten primären Alkoholen und/oder Mineralölen.

4. Verwendung einer Mischung aus 0,05 bis 25, vorzugsweise 0,5 bis 10 Gewichtsteilen pyrogener, hydrophobierter Kieselsäure und 1 bis 30, vorzugsweise 3 bis 25 Gewichtsteilen eines bei Raumtemperatur festen Paraffinwachsgemisches mit einem Erstarrungspunkt im Bereich von 35 bis 120 °C nach Anspruch 1 bis 3 in 60 bis 99, vorzugsweise 70 bis 96 Gewichtsteilen einer Mischung aus Guerbetalkoholen und Mineralölen.

5. Verwendung einer Mischung nach Anspruch 1 als feste Komposition auf festen Trägermaterialien.

**Claims**

1. The use of a mixture of pyrogenic, hydrophobicized silica and paraffin wax mixtures, solid at room temperature, of

a) 20 to 60 % by weight of microcrystalline paraffin wax having a solidification point of 60 to 95 °C,

b) 15 to 60 % by weight of hard paraffin having a solidification point of 40 to 60 °C and

c) 1 to 50 % by weight of soft paraffin having a solidification point of 32 to 42 °C

as a foam-inhibiting composition in alkaline detergents, which contain as surfactants at most about 2 % by weight of alkali- and active-chlorine-stable nonionic surfactants, for the machine washing of objects having hard surfaces.

2. The use of a mixture as claimed in claim 1 in the form of a dispersion in liquid carriers.

3. The use of a mixture as claimed in claims 1 and 2 in the form of a liquid dispersion in liquid branched-chain primary alcohols and/or mineral oils.

4. The use of a mixture of 0.05 to 25 parts by weight and preferably 0.5 to 10 parts by weight of pyrogenic, hydrophobicized silica and 1 to 30 parts by weight and preferably 3 to 25 parts by weight of a paraffin wax mixture having a solidification point in the range from 35 to 120 °C as claimed in claims 1 to 3 in 60 to 99 parts by weight and preferably in 70 to 96 parts by weight of a mixture of Guerbet alcohols and mineral oils.

5. The use of a mixture as claimed in claim 1 in the form of a solid composition on solid carriers.

**Revendications**

1. Utilisation d'un mélange d'acide silicique pyrogène hydrophobé et de mélanges de cires de paraffine solides à température ambiante composés de

a) 20 à 60 % en poids de cire de paraffine microcristalline dont le point de solidification est de l'ordre de 60 °C à 95 °C,

b) 15 à 60 % en poids de paraffine dure dont le point de solidification est de l'ordre de 40 °C à 60 °C, et

c) 1 à 50 % en poids de paraffine molle dont le point de solidification est de l'ordre de 32 °C à 42 °C

en tant que composition désémulsifiante dans des produits à action alcaline dont la contenance en additifs tensio-actifs est au maximum d'environ 2 % en poids d'agents tensio-actifs non ioniques résistants aux alcalis et au chlore actif pour le nettoyage en machine d'objets à surfaces dures.

2. Utilisation d'un mélange suivant la revendication 1 comme dispersion dans des supports liquides.

3. Utilisation d'un mélange suivant la revendication 1 comme dispersion liquide dans des alcools primaires à chaîne ramifiée et/ou des huiles minérales.

4. Utilisation d'un mélange de 0,05 à 25, de préférence de 0,5 à 10 parties en poids d'acide silicique pyrogène hydrophobé et de 1 à 30, de préférence de 3 à 25 parties en poids d'un mélange de cires de paraffine solide à température ambiante avec un point de solidification se situant entre 35 et 120 °C suivant les revendications 1 à 3 dans 60 à 99, de préférence 70 à 96 parties en poids d'un mélange d'alcools de Guerbet et d'huiles minérales.

5. Utilisation d'un mélange suivant la revendication 1 en tant que composition solide dans des supports solides.